Europäisches Patentamt

European Patent Office

Office européen des brevets

(19)

(11) Publication number: **0 051 794**
**B1**

# EUROPEAN PATENT SPECIFICATION

(12)

(45) Date of publication of patent specification: **29.01.86**

(51) Int. Cl.⁴: **G 06 F 13/26**

(21) Application number: **81109021.6**

(22) Date of filing: **28.10.81**

(54) **Distributed-structure message switching system on random-access channel for message dialogue among processing units.**

(30) Priority: **06.11.80 IT 6869180**

(43) Date of publication of application:
**19.05.82 Bulletin 82/20**

(45) Publication of the grant of the patent:
**29.01.86 Bulletin 86/05**

(84) Designated Contracting States:
**CH DE FR GB LI NL SE**

(56) References cited:
**GB-A-1 480 208**
**US-A-3 818 447**
**US-A-4 156 277**
**US-A-4 209 838**

**IBM TECHNICAL DISCLOSURE BULLETIN, vol. 22, no. 3, August 1979 New York, US A. BLUM: "Look-Ahead Access Request Circuit for Computer Systems", pages 1059-1060**
**IBM TECHNICAL DISCLOSURE BULLETIN, vol. 23, no. 7A, December 1980 New York, US D.F. BANTZ et al.: "Asynchronous Contention Resolution", pages 3043-3044**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Chiarottino, Volmer**
**Via Frassinetto, 8**
**Villanova Can.se Turin (IT)**
Inventor: **Poggio, Cesare**
**C.so. Raffaello, 24**
**Turin (IT)**
Inventor: **Reali, Aldo**
**Strade Aereoporto, 22**
**Caselle Turin (IT)**

(74) Representative: **Riederer Freiherr von Paar zu Schönau, Anton**
**Freyung 615 Postfach 2664**
**D-8300 Landshut (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to message-switching communication systems and in particular it concerns a distributed-structure message-switching system on random-access channel, for the message dialogue among processing units.

Whenever a given number of independent processing units are to mutually exchange information, the problem arises of optimizing the dialogue among them.

Various systems are known in the technique which allow a more or less optimal message-exchange. The main systems are:

— systems providing fully-meshed point-to-point connections of all the involved processing units. This kind of system obviously requires a high number of connections, the higher the processing-unit number, the more complex the system;

— time-division synchronous systems, according to which the connection line among the units is subdivided into time slots, which usually are as many, as are the connected units. This system is efficient when the traffic which originates in the various units has regularity and continuity characteristics, but it becomes inefficient when the nature of the traffic is of "burst" type (i.e. high peaks on low mean value) like the traffic generally originated by the processing units which constitute the nodes of the message switching systems;

— systems resorting to a single connection bus equipped with a control and arbitration unit, apt to resolve the conflicts of access (contention) to the bus by the various processing units. These systems are complex and expensive; furthermore they are not highly reliable as a failure of the arbitration logic can be detrimental to the whole-system operation;

— systems, which have random-access to a common transmission source. The messages are transmitted without taking into account the collision with messages from other stations; suitable methodologies have to be envisaged to recognize collisions among the messages and to determine their retransmission criteria.

One of the first examples of embodiments of this kind is found in "Aloha" (N. Abramson—F. Kuo, "The Aloha System", Computer Communication Network—Prentice-Hall Inc. 1973) wherein different stations broadcast their messages towards a centralized one.

The main disadvantages of Aloha system, and of many other similar systems consist in a low efficiency attainable on the transmission media and in a possible instability and saturation of the channel owing to the occurrence of multiple collisions which cause repeated message retransmissions. Under particular conditions the channel saturation can take place even for long time periods, during which the "throughput" is reduced to zero.

Another prior art system (US—AS 4 156 277) uses a distributed-structure system working on a single line carrying both addresses and data, the system solving by means of prevailing-logic-level criteria the conflicts for accessing the common single line by a number of peripheral devices dialoging with a central processor. The single line is gathered with a message ground line and possibly with a clock line to a bus. The system does not allow high efficiency and bit transmission rate due to the use of the same wire to solve the access conflicts and to serially transmit data. Upon seizure of the line by one of the peripheral devices this device can transmit the data after having received a send-instruction from the central processor only.

Contrary to this, the invention as characterized in claim 1 can work very efficient and fast since it uses separate wires for data and addresses thereby obtaining a higher bit rate, without the need for waiting for a send-instruction for transmitting data, as there is no central unit. By interconnecting the various processing units via two physical lines, i.e. a message traffic line and a service line, no special arbitration device designed to solve problems concerning access priority, message collision and common channel assignment is required, and, should a contention arise, the sending of a winning message is ensured. The system can be embodied in a simple and modular way and therefore results reliable and cheap.

In addition the system, provided by the present invention, has a structure entirely-distributed among the various interconnected processing units; an exception is possible with reference to the time base, which distributes the synchronism signal, and of the same connection bus; the result brings to a high reliability system.

The foregoing and other characteristics of the present invention will become clearer from the following description of an example of embodiment of the same, taken by way of example and not in a limiting sense, in connection with the annexed drawings in which:

Fig. 1 is a general description of the interconnections between the various processing units;

Fig. 2 is the block diagram of the device, subject of the present invention;

Fig. 3 is a time diagram which facilitates the understanding of the device operation.

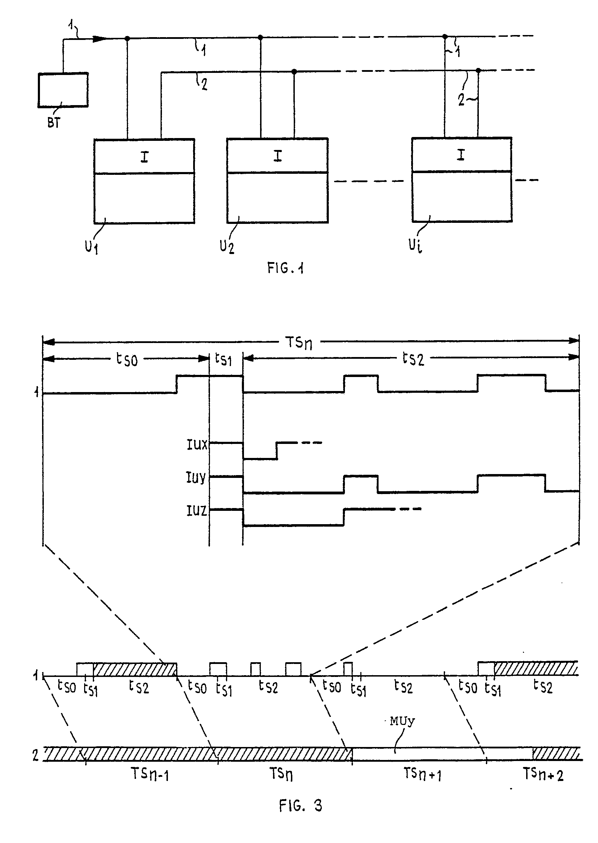

Reference BT in Fig. 1 denotes a usual time base apt to generate over a service line 1 the synchronism signal necessary to the alignment of the units constituting the system.

Reference U1, U2, ... Ui denote a number of local processing units, distributed over not too wide an area, arranged to receive and send messages via a bidirectional data line (channel) denoted by 2, depending on the timing signal they receive from BT via line 1.

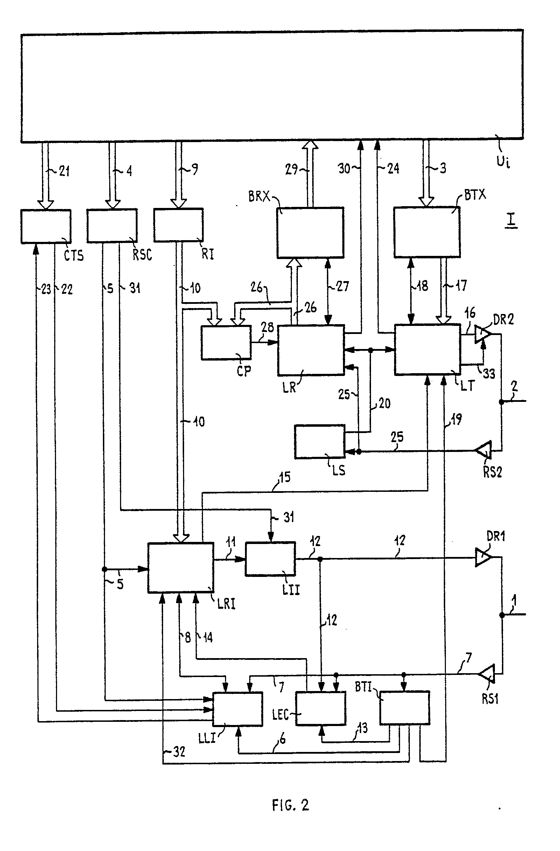

Inside units U references I denote the interfaces, all equal, which are the main object of the present invention and which will be examined in connection with Fig. 2.

Apart from interface I, the processing units U can be of any known type.

In this example each processing unit U originates a data traffic of the "burst" type, consisting of asynchronous messages independent of the ones emitted by the other units.

It has to be emphasized that the lines 1 and 2 are a support for the data transfer and can physically consist of different types of transmission means, such as: coaxial cable, "twisted pair", optical fibre, etc.

Of course, the attainable performances (transmission rate and consequent "throughput") and the implementing technology of the interfacing circuits will vary in dependence upon the used support.

Reference Ui in Fig. 2 denotes the same processing unit as in Fig. 1.

In Fig. 2 reference DR1 denotes a driver, of known type, of line 1 with an open-collector output allowing a determined logic level (for instance "0") to prevail over the service line.

Reference DR2 denotes a driver of channel 2, apt to be connected on the same channel to other drivers of the same type, allocated in the remaining processing units.

References RS1 and RS2 denote two circuits of known type apt to the reception of the bit stream present on lines 1 or 2 respectively.

References LR and LT denote two logic circuits, basically consisting of usual shift registers, arranged to transfer the data stream from and to channel 2 respectively, through RS2 e DR2.

Reference BRX denotes a usual buffer, consisting for instance of a FIFO memory (first in, first out) apt to the temporary storage of data coming from channel 2 through RS2 and LR, addressed to the processing unit Ui.

Reference BTX denotes a usual buffer, it too consisting for instance of a FIFO memory, apt to the temporary storage of data coming from units Ui to be forwarded towards the channel 2, through LT and DR2.

Reference RSC denotes a parallel register storing the commands the processing unit Ui transmits to I.

Reference RI denotes a parallel register, containing an identification address of the unit U, which either has been previously fixed by unit Ui itself or can simply be wired once for all. In the latter case connection 9 between Ui and RI is useless.

Reference CP denotes a known circuit apt to compare the address contained in RI with that contained, as will be seen, in a determined information field of the messages received by channel 2.

Reference LS denotes a circuit which extracts from the data stream received from RS2 via channel 2, the transmission frequency of said data. The main component of circuit LS is a normal PLL (phase locked loop). LRI denotes a logic, basically consisting of a usual shift register, apt to transmit the address stored in RI over the line 1 by means of LII, which will be examined hereinafter, and of DR1, upon the command it receives from RSC.

Reference LII denotes a circuit of known kind apt to complement to 1 the address bits, it receives from LRI, when it receives a definite command from RSC. LII forwards the bits on the service line through DRI.

Reference LEC denotes a usual comparison circuit for comparing the address bits, present at the LII output and those received from service line 1, through RSI.

Reference LLI denotes a logic circuit arranged to:

— recognize from the information stream present on line 1 the busy or the free state of the line itself;
— insert on line 1 by means of LRI, the possible busy-line state, depending on a suitable command received from CTS.

The implementation of a circuit of LLI type is not a problem to the person skilled in the art.

Reference BTI denotes a time base of any known type, apt to generate the bit transmission frequency on the line service. BTI receives, through RS1 the synchronism signal, present on service line 1, and gets synchronized with it.

Reference CTS denotes a usual down counter apt to store the number which expresses the duration of a message as multiples of time-slots TS. CTS is decremented by a unit at each time slot elapsed during the message transmission.

CTS is connected at the input to Ui, through connection 21, and at the output to LLI through wires 22 and 23.

In Fig. 3 a time diagram is depicted which puts in relationship the synchronism signal emitted by BT on line 1 with the address signals emitted on the same line 1 by three hypothetical processing units Ux, Uy, Uz.

The time interval comprised between two subsequent synchronism signals defines time slot TS.

Time slot TS is subdivided into three parts: the first part $t_{s0}$ is intended for the synchronism signal, which for instance may consist of the bit sequence 00001 represented in the drawing; the second part $t_{s1}$ is alotted to a bit L/l which when at a logic level "1", indicates that the data channel (line 2) is available; the last part $t_{s2}$ is intended for the address bits of each unit U.

As already mentioned, each unit U is univocally identified by its own address; however, it is clear that no configuration capable of simulating the synchronism signal ought to be allotted.

Each time slot TS of service line 1 corresponds on line 2 to an equal time period the single units U can dispose of for the transmission of their own data. The method, according to which the various units U are enabled to transmit on the channel (line 2) will be seen hereinbelow.

For a better understanding in Fig. 3 channel time $TS_n$ has been extended, indicating by IUx, IUy, IUz the addresses of units Ux, Uy, Uz; in addition the busy state of channel 2 has been emphasized, denoting by MUy the message actually transmitted by unit Uy.

The example represented in Fig. 3 shows the collision methodology, the channel acquisition and the subsequent message transmission.

In $TS_{n-1}$ no unit transmits messages and no unit requires the channel assignment.

In $TS_n$ no unit transmits messages; but the units Ux, Uy, Uz ask simultaneously for the channel assignment.

At the 2nd bit time in $t_{s2}$ of $TS_n$ unit Ux renounces, at the 5th bit time in $t_{s2}$ of $TS_n$, unit Uz renounces. Unit Uy is the winner since, as will be seen hereinbelow its address has a greater priority than the address of the other two units and so it secures its access to the channel in the subsequent time slot.

In $TS_{n+1}$ and partly also in $TS_{n+2}$, unit Uy transmits its message MUy which, since in the cited example MUy is a message of length comprised between one and two time-slots, resets bit L/I, contained in portion $t_{s2}$ of $TS_{n+1}$.

The initial value of bit L/I is restored at time slot $TS_{n+2}$ to allow possible successive channel acquisition conflicts.

Prior to describing the operation of the message switching unit some preliminary definitions will be given.

Hereinafter where reference will be made either to signals or messages, exchanged on lines 1 and 2 among the various units U, they are assumed to be transferred by interface I.

Time base BT (Fig. 1) emits on the line 1 towards all the units U a synchronism signal in time $t_{s0}$ of each time slot TS (Fig. 3). The units, which have a message to transmit, upon reception of said synchronism signal and provided the channel is available (bit L/I of $t_{s1}$ at "1") emit, through their interface I, on the same line 1 their address.

As line 1 is implemented according to the digital technique with one logical level prevailing over the other (for instance with prevailing logic level "0"), if at the same bit time two or more units U happen to emit over line 1 different logic levels, level "0" is always prevailing.

Therefore each unit U effecting a control between the emitted bit and the bit received by line 1, in case of discrepancy between the two levels, notices that at least one other unit exists which simultaneously transmits on line 1 with higher priority.

Since logic level "0" is prevailing over the line, the difference can take place only if the first unit was transmitting a "1".

In this case the unit or the units, which have detected such a discrepancy, interrupt their transmission.

The comparison is executed for all the address bits; at the end of the last bit, an only unit will be sure it has correctly transmitted its address on line 1 and therefore it has secured the channel acquisition. Therefore at the subsequent TS, the unit can begin the transmission of its own data.

It is worth noting that during a generic time slot $(TS_n)$, in which the various units U may contend for the right of transmitting their data on the channel (line 2) in the subsequent time slot $(TS_{n+1})$, the channel can be engaged by a unit which had previously won its possession.

If a unit U is to transmit a message requiring more than one time slot for its transmission, the unit can maintain the channel possession by resetting to "0" the bit of field $t_{s1}$ of TS (Fig. 3) for all the successive time slots necessary to the message transmission.

All the units U before initiating the data channel acquisition procedure, check, as mentioned, the state of this bit, and if busy, they postpone the procedure until it is disengaged.

The format of the data message which are transmitted on the channel can be organized in whatever suitable way, provided indications are given relating to the sender and addressee identities and, in the systems in which there is no resorting to fixed-length messages the indication of the length itself.

To facilitate message recognition and processing they ought to be labelled by a particular flag at the beginning and at the end and they ought also to be equipped with a code signalling the presence of possible errors.

The message format therefore becomes similar to that of high-level protocol, of the SDLC/HDLC kind, known to the person skilled in the art.

Let us suppose, with reference to Fig. 2, that unit Ui has a message to forward over the channel (line 2).

Ui sends the message, organized as already seen, through connection 3 into transmission buffer BTX and at the same time, through a command sent to register RSC through connection 4, it starts the process to gain the access to the already examined channel.

RSC transfers, through connection 5, said command to blocks LLI and LRI.

LLI, upon this command and the signal it receives from BTI through wire 6, indicating the bit time $t_{s1}$, samples the logic state of line 1, it receives through RS1 and wire 7, in order to know whether at the time of the subsequent time slot the channel is available or it has already been engaged.

If LLI finds out the channel busy-state (bit L/I at logic value "0") it begins repeating the same test at the subsequent time-slot or time-slots till the channel is found disengaged.

If on the contrary LLI finds out the free state (bit L/I at "1") it sends the command to LRI, through connection 8, of transmitting on line 1, through wire 11, LII, the wire 12 and DR1, the first bit of the address of unit Ui it extracts from RI through connection 10.

The transmission time of said bit and of all the subsequent ones, as will be seen hereinafter, is supplied to LRI from time base BTI on wire 32.

The transmitted address bit is also sent, through wire 12, prior to being transferred on line 1 through DR1, to comparison circuit LEC.

At the same time LEC receives through wire 7 and RS1 the logic state present on line 1.

Within the time of said address bit, LEC makes the comparison between the values of the two received bits, upon the synchronization it receives from BTI on wire 13, taking into account the propagation delays on the service line.

If the two bits are equal LEC sends to LRI, through connection 14, a signal allowing LRI to begin the transmission of the second address bit; if, on the contrary, the two bits are different, LEC sends to LRI, still through connection 14, a stop command for the transmission in progress. The stop lasts for the whole time of the time slot and of possible subsequent ones, in case logic LLI finds out, depending on the examination of bit L/I, the channel busy state.

The same procedure applies to all the other address bits up to the last one.

If the transmission is stopped as a consequence of a negative result, the process restarts from the first time slot in which logic LLI finds the channel free.

The information that LRI renounces prosecuting the transmission of the address and the information of the subsequent command to restart the process, is exchanged between LRI and LLI through connection 8.

On the contrary, in case the transmission of the last bit has taken place correctly, logic LRI signals through connection 15 to LT that at the subsequent time slot it can begin the transmission on the data message channel. LT extracts the message from BTX through connection 17 and sends it serially through wire 16 and DR2 after enabling, upon command on wire 33, the latter to transmit.

The data message bit overflow from BTX to LT occurs in parallel on connection 17, depending on the usual data transfer commands exchanged by BTX and LT through connection 18.

Data message transmission on the channel is synchronously effected by LT at the beginning of time slot TS, depending on the signal LT receives from BTI via wire 19, at a frequency supplied by LS, through wire 20.

In case the message lasts longer than a single time slot (TS), to ensure the channel possession for the necessary time, LLI, depending on the signal it receives from CTS on wire 22, sends to LRI on connection 8 the command of resetting to "0" the bit L/I of $t_{s1}$ (Fig. 3) for all the necessary time slots.

The information on the number of time slots necessary to a given message is supplied to the counter CTS from Ui by means of connection 21.

CTS is decremented by a unit at each time slot of effective message transmission from LLI via wire 23.

CTS, at the end of the counting, results to be reset and takes off the reset command of bit L/I for LLI; therefore bit L/I is returned to logic value "1" indicating that, starting from the subsequent time slot, the channel is available. Once the message transmission is completed, the transmission logic LT communicates it to unit Ui through wire 24.

In order to prevent some units from having preferential access to the transmission channel with respect to the other units having the same priority rank, which units therefore would be in a disadvantageous position, action may be taken to complement the address field as a consequence of each transmission by a command which Ui sends to LII through wire 4, RSC and wire 31.

On the contrary in the case in which no command is imposed on LII, the latter remains transparent at the passage of the address from LRI to DRI and on line service 1.

The interface of Fig. 2 is also capable of receiving the messages which transit on line 2, generated by other units U different from Ui or even those generated by Ui itself.

The latter case can advantageously be used to perform a number of tests of operation of the interface itself.

If a message is present on the channel (line 2) it is received by RS2 and transferred via wire 25 to the receiving logic LR and to circuit LS, which extracts from the message stream the bit transmission frequency.

LR extracts the content of the address area of the received message and sends it to comparator CP.

CP makes the comparison between the address it receives from LR and the address received from RI through connection 10, or with the pre-wired address and sends this result to LR via wire 28.

If the comparison is negative it means that the message which transits on the channel does not pertain to unit Ui and therefore it is ignored.

If, on the contrary, the address comparison is positive and the message is recognized as "pertinent" (to Ui), LR transfers the message contents, in parallel, through connection 26 to buffer BRX.

Besides BTX and LR exchange commands and information on the message transfer through connection 27.

At the same time LR informs Ui, through wire 30, that in buffer BRX a message to extract is ready; which operation Ui executes by using connection 29.

## Claims

1. Distributed-structure message-switching system on random access channel for message dialogue among processing units (Ui), said message-switching system consisting of input/ output interface circuits (I), one per each processing unit (Ui) generating the messages, and said system resolving, at each time slot, by means of prevailing-logic-level criteria, the conflicts for accessing the channel by said processing units (Ui), each interface circuit (I) comprising: drivers (DR1, DR2) and receiving circuits (RS1, RS2) for respectively transmitting and receiving data to and from the channel; a first address comparator of single address bits (LEC) for effecting a bit-by-bit comparison between the address bits picked-up from the channel and the address bits to be transmitted onto the channel and for interrupting the transmission when an address bit present on the channel has a logic level prevailing over that of the corresponding address bit to be transmitted; characterized in that said channel (1, 2) comprises a higher bit rate message line (2) and a physically independent lower bit rate service line (1) and further characterized by

— first (LR) and second (LT) logic circuits for respectively receiving through one of said receiving circuits (RS2), and transmitting, through one of said drivers (DR2), the data message stream from and over said message line (2);

— a first buffer (BRX) for temporarily storing the data coming from the message line (2) to said processing unit (Ui) through said receiving circuit (RS2) and said first logic circuit (LR);

— a second buffer (BTX) for temporarily storing the data coming from said processing unit (Ui) and to be sent on the message line (2) through said second logic circuit (LT) and said driver (DR2);

— a first register (RSC) for storing the commands of activation of the channel access procedure, coming from said processing unit (Ui) when said data to be sent on the channel are present in said second buffer (BTX);

— a second register (RI) for storing the processing-unit identification address;

— a second address comparator (CP) for comparing the address in said second register (RI) with the one it receives from the message line (2), and for emitting, in case of equality, an enabling signal (28) to said first logic circuit (LR) to receive data present on the message line (2);

— a third logic circuit (LRI), activated by a command received from said first register (RSC), for serially transmitting on said service line (1), through another one of said drivers (DR1), after having received an acknowledge signal (8) of "free" state of the service line (1), the address in said second register (RI); and for supplying an enabling signal (15) to said second logic circuit (LT) for data transmission on said message line (2), when the transmission of said address ends; said first comparator (LEC) making the comparison between the addresses present on the service line (1) and on the input of the driver (DR1) connected to the service line (1), and interrupting the address transmission by said third logic circuit (LRI) when the bit on the service line (1) has a prevailing logic level; and

— a fourth logic circuit (LLI) for recognizing, when activated by a command received from said first register (RSC), from the data address stream it receives from said service line (1) through said first receiving circuits (RS1), the "free" or "busy" state of the line itself, and generating said acknowledge signal (8).

2. Distributed-structure message-switching system as in claim 1, characterized in that each interface circuit (I) further comprises a down counter (CTS), programmed by said processing unit (Ui) to the number of time slots of message to be transmitted and enabled to the counting when said fourth logic circuit (LLI) acknowledges said "free" state, said counter supplying at every counting step corresponding to a time slot, command signal (22) to said fourth logic circuit (LLI), said command determining the insertion on said service line (1), by said first logic circuit (LRI), of a "busy" state indication.

3. Distributed-structure message-switching system as in claim 2, characterized in that each interface circuit (I) further comprises a complementing circuit (LII), inserted between said third logic circuit (LRI) and said service line (1), for effecting the 1's complement of the address bits it receives from said third logic circuit (LRI) and sending the result onto the service line (1), for modifying the priority level of its own device (Ui).

4. Distributed-structure message-switching system as in any of claims 1 to 3, characterized in that a fifth logic circuit (LS) of the phase-lock type extracts the transmission frequency from the data stream it receives from the message line (2) and forwards it to the first and second logic circuits (LR, LT), and a time base (BTI) synchronizes itself with a time signal it receives from the service line (1) and generates the transmission frequency of the bits which are to be sent over the line, as well as time signals controlling the operation of some of the internal blocks of the interface.

5. Distributed-structure message-switching system according to any of claims 1 to 4, characterized in that the first (RSC) and second (RI) registers are of the parallel type.

**Revendications**

1. Commutateur de messages à structure répartie sur un canal à accès aléatoire, pour l'échange de messages entre des unités de traitement (Ui), ledit commutateur de messages étant constitué par des circuits d'interface (I) d'entrée et sortie, un pour chaque unité de traitement (Ui) quiengendre les messages, de ledit système étant en mesure de résoudre, à chaque intervalle de temps, à l'aide de critères à niveau logique prévalent, les conflits d'accès au canal par lesdites unités de traitement (Ui), chaque circuit d'interface (I) comprenant des circuits pilotes (DR1, DR2) et des circuits de réception (RS1, RS2) pour respectivement transmettre et recevoir des données vers et du canal même; un premier comparateur des bits d'adresse individuels (LEC) pour effectuer une comparaison entre les bits d'adresse qu'il reçoit du canal et ceux transmis sur le canal, et pour interrompre la transmission lorsqu'un bit d'adresse présent sur le canal a un niveau logique prévalent sur le bit d'adresse correspondant à transmettre; caractérisé en ce que ledit canal (1, 2) comprend une ligne de messages à debit plus élevé (2) et une ligne de service physiquement indépendante (1), à un débit plus bas, caractérisé de même par:

— un premier (LR) et un deuxième (LT) circuit logiques pour respectivement recevoir à travers un desdits circuits de réception (RS2), et transmettre à travers un desdits circuits pilotes (DR2) le flux de messages de données de et vers ladite ligne de messages (2);

— une première mémoire tampon (BRX) apte à mémoriser temporairement les données, destinées à ladite unité de traitement (Ui), qui proviennent de la ligne de messages (2) à travers ledit circuit de réception (RS2) et dudit premier circuit logique (LR);

— une deuxième mémoire tampoin (BTX) apte à mémoriser temporairement les données, provenant de ladite unité de traitement (Ui), à envoyer vers la ligne de messages (2) à l'aide dudit deuxième circuit logique (LT) et dudit circuit pilote (DR2);

— une premier registre (RSC) apte à stocker en mémoire les commandes destinées à l'activation de la procédure d'accès au canal et provenantes de ladite unité de traitement (Ui), lorsque les données à envoyer sur le canal sont présentes dans ladite deuxième mémoire tampon;

— un second registre (RI) apte à stocker en mémoire l'adresse d'indentification de l'unité de traitement (Ui);

— un comparateur d'adresses (CP) apte à comparer l'adresse dudit second registre (RI) avec l'adresse qu'il reçoit de la ligne de messages (2) et à émettre au cas d'égalité, un signal de validation (28) pour ledit premier circuit logique (LR) à la réception des données présentes sur la ligne de messages (2);

— un troisième circuit logique (LRI) activé par une commande reçue dudit premier registre (RSC), apte à transmettre en série sur ladite ligne de service (1), à travers un autre desdits circuits pilotes (DR1) après la réception d'un signal de confirmation (8) de l'état de "libre" de la ligne de service (1), l'adresse présent dans ledit second registre (RI); et apte à fournir un signal de validation (15) audit deuxième circuit logique (LT) pour la transmission des données sur ladite ligne de messages (2), lorsque la transmission de ladite adresse est terminée; ledit premier comparateur (LEC) étant apte à comparer les adresses présentes sur la ligne de service (1) avec l'adresse sur l'entrée du circuit pilote (DR1) connecté à la ligne de service (1), et à interrompre la transmission de l'adresse par le troisième circuit logique (LRI) lorsque le bit sur la ligne de service (1) a un niveau logique prévalent; et

— un quatrième circuit logique (LLI), apte à reconnaître, lorsqu'il est activé par une commande qu'il reçoit dudit premier registre (RSC), du flux des données d'adresse qu'il reçoit de ladite ligne de service (1) à travers lesdits premièrs circuits de réception (RS1), l'état de libre ou occupé de la ligne même et apte également à engendrer ledit signal de confirmation (8).

2. Commutateur de messages à structure répartie selon la revendication 1, caractérisé en ce que chaque circuit d'interface (I) comprend en outre un décompteur (CTS), programmé par ladite unité de traitement (Ui) au nombre des intervalles de temps du message à transmettre et validé au comptage lorsque ledit quatrième circuit logique (LLI) confirme ledit état de "libre", ledit décompteur en fournissant à chaque pas de comptage qui correspond à un intervalle de temps, un signal de commande (22) audit quatrième circuit logique (LLI), ladite commande détérminant l'insertion sur ladite ligne de service (1), par ledit premier circuit logique (LRI), d'une indication d'état d'"occupé".

3. Commutateur de messages à structure répartie selon la revendication 2, caractérisé en ce que chaque circuit d'interface (I) comprend en outre un circuit de complément (LII), inséré entre ledit troisième circuit logique (LRI) et ladite ligne de service (1), pour effectuer le complément à 1 des bits d'adresse qu'il reçoit dudit troisième circuit logique (LRI) et pour envoyer le résultat sur la ligne de service (1) pour modifier le niveau de priorité de son unité (Ui).

4. Commutateur de messages à structure répartie selon l'une quelconque des revendications 1 à 3, caractérisé en ce que un cinquième circuit logique (LS) du type à verrouillage de phase extrait la fréquence de transmission du flux des données qu'il reçoit de la ligne de message (2) et l'envoie auxdits premier et deuxième circuits logiques (LR, LT), et une base de temps (BTI) est synchronisée avec un signal de rhythme qu'elle reçoit de la ligne de service (1) et engendre la fréquence de transmission des bits à envoyer sur la ligne, ainsi que les signaux de rhythme qui contrôlent le fonctionnement des blocs internes de l'interface.

5. Commutateur de messages à structure répartie selon l'une quelconque des revendication 1 à 4, caractérisé en ce que le premier (RSC) et deuxième (RI) registres sont du type parallèle.

**Patentansprüche**

1. Nachrichtenschaltsystem mit nicht-zentralem Aufbau unter Verwendung eines zugriffsfreien Kanals für den Nachrichtendialog zwischen mehreren Datenverarbeitungseinheiten (Ui), wobei das Nachrichtenschaltsystem aus für jede der Verarbeitungseinheiten (Ui), die die Nachrichten erzeugen, einer Eingangs/Ausgangs-Schnittstellenschaltung (I) besteht und in jeder Zeitlage mit Hilfe von Kriterien eines bevorrechtigen logischen Pegels die Konflikte für den Zugriff zum Kanal durch die Verarbeitungseinheiten (Ui) löst und jede Schnittstellen schaltung (I) folgende Einzelschaltungen umfaßt: Treiber (DR1, DR2) und Empfängerschaltungen (RS1, RS2) zum Senden von Daten auf den Kanal bzw. zum Empfangen von Daten vom Kanal; einen ersten Adressenkomparator für die einzelnen Adressenbits (LEC) zum Durchführen eines Bit-um-Bit-Vergleichs zwischen den vom Kanal aufgenommenen Adressenbits und den auf Kanal zu sendenden Adressenbits und zum Unterbrechen des Sendens, wenn ein auf dem Kanal vorhandenes Adressenbit einen logischen Pegel aufweist, der gegenüber demjenigen des entsprechenden zu sendenden Adressenbits bevorrechtigt ist; dadurch gekennzeichnet, daß der Kanal (1, 2) eine Nachrichtenleitung (2) von höherer Bitrate und eine hiervon physikalisch unabhängige Dienstleitung (1) von niedrigerer Bitrate umfaßt, und weiterhin gekennzeichnet durch

— eine erste logische Schaltung (LR) und eine zweite logische Schaltung (LT), die den Datennachrichtenstrom von der bzw. über die Nachrichtenleitung (2) durch eine der Empfängerschaltungen (RS2) empfangen bzw. durch einen der Treiber (DR2) senden;
— einen ersten Puffer (BRX) zum vorübergehenden Speichern der von der Nachrichtenleitung (2) über die Empfängerschaltung (RS2) und die erste logische Schaltung (LR) zur Verarbeitungseinheit (Ui) kommenden Daten;
— einen zweiten Puffer (BTX) zum vorübergehenden Speichern der von der Verarbeitungseinheit (Ui) kommenden und zur Nachrichtenleitung (2) über die zweite logische Schaltung (LT) und den Treiber (DR2) zu sendenden Daten;
— ein erstes Register (RSC) zum Speichern der Befehle zum Ingangsetzen des Kanalzugriffsvorgehens, die von der Verarbeitungseinheit (Ui) kommen, wenn die auf dem Kanal zu sendenden Daten im zweiten Puffer (BTX) vorliegen;
— ein zweites Register (RI) zum Speichern der Identifizierungsadresse der Verarbeitungseinheit (Ui);
— einen zweiten Adressenkomparator (CP) zum Vergleichen der im zweiten Register (RI) gespeicherten Adresse mit derjenigen Adresse, die er von der Nachrichtenleitung (2) empfängt, und zum Abgeben eines Ingangsetzungssignals (28) an die erste logische Schaltung (LR) zum Empfangen von auf der Nachrichtenleitung (2) vorhandenen Daten, wenn der Vergleich Gleichheit ergibt;
— eine dritte logische Schaltung (LRI), due auf einen Befehl, den sie vom ersten Register (RSC) empfängt, aktiviert wird, zum seriellen Senden der im zweiten Register (RI) befindliche Adresse auf der Dienstleitung (1) über einen anderen der Treiber (DR1), nachdem sie ein Bestätigungssignal (8) des Zustands "frei" der Dienstleitung (1) empfangen hat; und zum Liefern eines Ingangsetzungssignals (15) an die zweite logische Schaltung (LT) zum Datensenden auf der Nachrichtenleitung (2), wenn die Übertragung der Adresse endet; wobei der erste Komparator (LEC) den Vergleich zwischen den Adressen auf der Dienstleitung (1) und am Eingang des mit der Dienstleitung (1) verbundenen Treibers (DR1) durchführt und das Adressensenden mit Hilfe der dritten logischen Schaltung (LRI) unterbricht, wenn das Bit auf der Dienstleitung (1) einen bevorrechtigenden logischen Pegel aufweist; und
— eine vierte logische Schaltung (LLI) zum Erkennen des Zustands "frei" oder "belegt" der Dienstleitung (1) aus dem Datenadreßstrom, den sie von der Dienstleitung (1) durch die ersten Empfängerschaltungen (RS1) empfängt, bei Ansteuerung durch einen vom zweiten Register (RSC) empfangenen Befehl, und zum Erzeugen des Bestätigungssignals (8).

2. Nachrichtenschaltsystem mit nicht-zentralen Aufbau nach Anspruch 1, dadurch gekennzeichnet, daß jede Schnittstellenschaltung (I) weiterhin einen Abwärtzzähler (CTS) enthält, der von der Verarbeitungseinheit (Ui) auf die Zahl der Zeitlagen der zu sendenden Nachricht programmiert wird und zum Zählen angesteuert wird, wenn die vierte logische Schaltung (LLI) den Zustand "frei" feststellt, und der bei jedem Zählschritt entsprechend einer Zeitlage ein Befehlsignal (22) an die vierte logische Schaltung (LLI) abgibt, das das Einsetzen eine Anzeige für den Zustand "belegt" auf der Dienstleitung (1) durch die erste logische Schaltung (LRI) befiehlt.

3. Nachrichtenschaltsystem mit nicht-zentralem Aufbau nach Anspruch 2, dadurch gekennzeichnet, daß jede Schnittstellenschaltung (I) weiterhin eine Komplementierschaltung (LII) enthält, die zwischen die dritte logische Schaltung (LRI) und die Dienstleitung (1) eingesetzt ist, zur Durchführung des 1-Komplements der Adressenbits, die sie von der dritten logischen Schaltung (LRI) empfängt, und das Ergebnis zum Modifizieren des Prioritätspegels seiner eigenen Einheit (Ui) auf die Dienstleitung (1) sendet.

4. Nachrichtenschaltsystem mit nicht-zentralem Aufbau nach einem der Ansprüche 1 bis 3, dadurch gekennzeichnet, daß eine fünfte logische Schaltung (LS) des Typs mit Phasenverriegelung die Sendefrequenz aus dem von der Nachrichtenleitung (2) empfangenen Datenstrom extrahiert und sie zur ersten und zur zweiten logischen Schaltung (LR, LT) weitergibt, und daß ein Zeitgeber (BTI) sich mit einem Zeitsignal synchronisiert, das er von der Dienstleitung (1) empfängt, und die Sendefrequenz der Bits erzeugt, die über die Leitung zu senden sind, sowie Zeitsignale erzeugt, die den Betrieb einiger der internen Blöcke der Schnittstellenschaltung steuern.

5. Nachrichtenschaltsystem mit nicht-zentralem Aufbau nach einem der Ansprüche 1 bis 4, dadurch gekennzeichnet, daß das erste Register (RSC) und das zweite Register (RI) Parallelregister sind.

0 051 794

FIG. 1

FIG. 3

1

FIG. 2

2